# EUROPÄISCHE PATENTSCHRIFT

(11) **EP 0 497 738 B1**
(45) Veröffentlichungstag und Bekanntmachung des Hinweises auf die Patenterteilung: **18.03.1998**
(21) Anmeldenummer: 92810051.0
(22) Anmeldetag: 27.01.1992
(51) Int. Cl.: F16L 3/20

(54) **Einrichtung zur Halterung von länglichen Körpern**
Device for supporting elongated elements
Dispositif pour supporter des éléments allongés

(30) Priorität: 28.01.1991 CH 258/91
(43) Veröffentlichungstag der Anmeldung: 05.08.1992
(73) Patentinhaber: HG COMMERCIALE, CH-9015 St. Gallen (CH)
(72) Erfinder: Mueller, Kurt, CH-9016 St. Gallen (CH)
(74) Vertreter: Kulhavy, Sava V.

(56) Entgegenhaltungen:
- EP-A- 0 235 629
- CH-A- 318 370
- DE-A- 3 736 408
- DE-A- 3 916 278
- US-A- 4 714 218

## Beschreibung

Die vorliegende Erfindung betrifft eine Einrichtung zur Halterung eines länglichen Körpers, mit einem ersten Abschnitt, welcher eine Vorrichtung zum Erfassen des länglichen Körpers aufweist, und mit einem länglichen Träger für die Erfassungsvorrichtung, welcher praktisch senkrecht zum länglichen Körper verläuf, wobei die Erfassungsvorrichtung gegenüber dem Träger stufenlos verstellbar ist.

Eine Einrichtung dieser Gattung ist beispielweise aus CH-PS 318 370 bekannt. Diese Einrichtung weist eine Schiene mit einem im wesentlichen C-förmigen Querschnitt auf, welche so angeordnet ist, dass die C-Schenkel aufwärts gerichtet sind, wobei sie Führungsflansche an der Schiene bilden. Die Einrichtung umfasst ferner einen Befestigungsbügel, welcher auf dem rohrförmigen Körper sitzt und dessen Schenkel diesen Körper seitlich umfassen. Das Ende des jeweiligen Schenkels ist mit einem Haken versehen, welcher einen der Fuhrungsflanschen an der Schiene hintergreift. Im Bügel ist eine Druckplatte angeordnet, deren Krümmung der Krümmung des rohrförmigen Körpers entspricht und welche den Körper gegen die Schiene anpresst. Die Schiene kann mit Hilfe eines Knotenbleches an eine andere Schiene angeschlossen sein, welche senkrecht zu dieser Schiene verläuft, denselben Querschnitt aufweist und welche in einer Ebene liegt, welche zur Ebene der ersten Schiene parallel verläuft. Diese zweite Schiene kann beispielsweise an der Decke eines Raumes befestigt sein.

Die Lage des länglichen Körpers kann bei dieser vorbekannten Einrichtung nur in einer Ebene verstellt werden, welche parallel zur Ebene der genannten Schiene bzw. der genannten Schienen liegt. Wenn Rohrleitungen im Gelände verlegt werden, ist es erforderlich, dass die Lage derselben in jeder der Raumrichtungen verstellt werden kann.

In DE-A- 39 16 278 ist eine Haltevorrichtung für ein Schiebestück für Rohre offenbart. Das Schiebestück weist einen Grundkörper auf, auf dem Tragelemente für ein Rohr montiert sind, wobei der Grundkörper die Form eines Stabes mit einem quadratischen Querschnitt hat. Dieser Grundkörper erstreckt sich in der Längsrichtung des länglichen Körpers und er ist in einer Gleitmuffe längsverschiebbar gelagert. Diese Gleitmuffe ist an Winkelstücken befestigt. Im vertikal verlaufenden Schenkel des jeweiligen Winkelstückes sind vertikal verlaufende Langlöcher ausgeführt, welche eine horizontale Verstellung der Lage der Winkelstücke und somit auch der Schiebemuffe, des Schiebestückes und schlussendlich auch des Rohres erlauben. Als nachteilig gilt bei dieser vorbekannten Einrichtung unter anderem, dass sie keine seitliche Verstellung der Lage des länglichen Körpers erlaubt.

Die Tragvorrichtung für Kabel, Rohrleitungen usw., welche in DE-A- 37 36 408 offenbart ist, weist zumindest einen vertikal verlaufenden Stiel auf. Von diesem Stiel gehen Konsolen rechtwinklig seitlich ab, deren Oberseite eine Lochung aufweist. Auf der Konsole liegen Kabel, Rohre usw. Die Lochung ermöglicht, die Kabel, Rohre usw. mit Hilfe von Schellen auf der Konsole zu befestigen. Die seitliche Lage der Rohre usw. kann bei dieser vorbekannten Einrichtung wegen der Lochung nur sprungweise gewählt werden, was unter Umständen zu unerwünschten Spannungen in den Wänden der verlegten Rohre führen könnte. Ausserdem liegen die Rohre direkt auf der Konsole, was erhebliche Probleme beispielsweis bei thermisch bedingter Dilatation der Rohre verursachen könnte.

Die Aufgabe der vorliegenden Erfindung ist, eine Halterung für Rohrkörper zu offenbaren, welche die genannten sowie noch weitere Nachteile nicht aufweist.

Diese Aufgabe wird bei der Einrichtung der eingangs genannten Gattung erfindungsgemäss so gelöst, wie dies im kennzeichnenden Teil des Patentanspruchs 1 definiert ist.

Nachstehend werden Ausführungsmöglichkeiten der vorliegenden Einrichtung anhand der beiliegenden Zeichnungen näher erläutert. Es zeigt:
Fig. 1 in einer Seitenansicht eine erste Ausführungsmöglichkeit der vorliegenden Einrichtung,
Fig. 2 perspektivisch die Einrichtung gemäss Fig. 1,
Fig. 3 perspektivisch einen Greifer, welcher zur Verbindung zweier Teile der Einrichtung gemäss Fig. 1 verwendet werden kann,
Fig. 4 perspektivisch eine zweite Ausführungsmöglichkeit der vorliegenden Einrichtung,
Fig. 5 in einer Seitenansicht die Einrichtung gemäss Fig. 4, wenn diese im Erdreich eingelassen ist,
Fig. 6 in einer Seitenansicht eine dritte Ausführungsmöglichkeit der vorliegenden Einrichtung,
Fig. 7 in einer Seitenansicht eine vierte Ausführungsmöglichkeit der vorliegenden Einrichtung und
Fig. 8 perspektivisch eine Kombination zweier Ausführungsmöglichkeiten der vorliegenden Einrichtung.

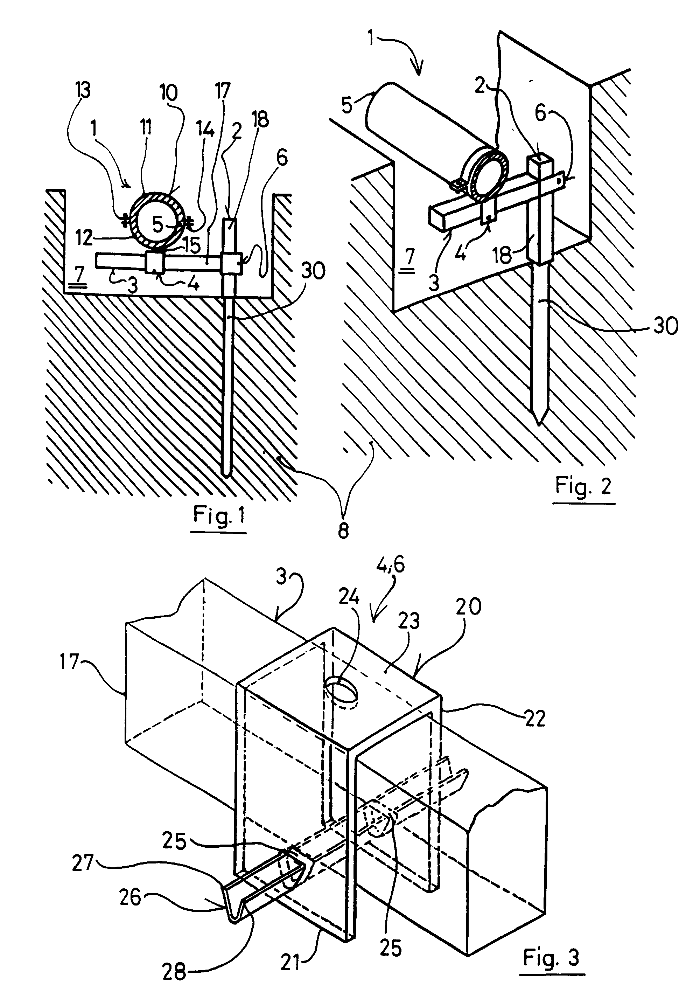

Die in Fig. 1 in einer Seitenansicht dargestellte Einrichtung dient zur Halterung von rohrförmigen Körpern 5 an Ort und Stelle. In Fig. 2 ist diese Ausführungsmöglichkeit der vorliegenden Einrichtung perspektivisch dargestellt. Bei rohrförmigen Körpern 5 kann es sich beispielsweise um Rohrleitungen handeln, welche im Erdreich verlegt sind bzw. verlegt werden sollen. Die vorliegende Einrichtung, welche kurz auch als Halterung genannt wird, umfasst einen ersten Abschnitt 1, welcher zur Aufnahme des Rohrkörpers 5 bestimmt und ausgeführt ist. Die Halterung umfasst ferner einen zweiten Abschnitt 2, welcher zur Abstützung des ersten Halterungsabschnittes 1 und somit auch des Rohrkörpers 5 ausgebildet ist. Es ist auch ein Träger 3 vorgesehen, welcher zwischen dem Aufnahmeabschnitt 1 und dem Stützabschnitt 2 geschaltet ist. Die Bestandteile der Halterung sind mit Hilfe einer Verbindungsvorrichtung 4 miteinander gekoppelt.

Der Stützabschnitt 2 und der Träger 3 sind als längliche Glieder ausgeführt und sie weisen im dargestellten Fall einen im wesentlichen viereckigen oder quadratischen Querschnitt auf. Die Aussenseiten der Wände der Körper dieser Längsglieder 2 und 3 sind im wesentlichen glatt.

Der erste Halterungsabschnitt 1 weist eine Schelle 10 auf, welche im dargestellten Fall zwei Hälften 11 und 12 enthält. Die Schellenhälften 11 und 12 sind im wesentlichen halbkreisförmig, wobei der Durchmesser der Halbkreise 11 und 12 an den Durchmesser des Rohres 5 angepasst ist. Die Schellenhälften 11 und 12 sind aus Flacheisen, welches entsprechend der Querschnittsform des Körpers 5 gebogen ist. Solche Schellenhälften 11 und 12, wenn sie miteinander verbunden sind, bilden in der Tat eine kurze Hülse, welche eine Längsachse aufweist. Diese Längsachse geht im wesentlichen durch die Mitte des Querschnittes der Schelle 10 und sie steht praktisch senkrecht zur Fläche der Schelle. Die Schelle 10 nimmt gegenüber dem Körper 5 die optimale Lage dann ein, wenn die Längsachse der Schelle 10 und die Längsachse des in der Schelle 10 liegenden Abschnittes des Körpers 5 zusammenfallen.

Die Endpartien der Schellenhälften sind mit radial abstehenden Flanschen 13 versehen, welche zur Zusammenfügung der Schellenhälften 11 und 12 ausgebildet sind. Im dargestellten Fall weisen die Flansche 13 geschlossene oder gegen aussen hin offene Löcher auf, durch welche Schrauben 14 hindurchgehen. Es ist jedoch beispielsweise auch möglich, dass das eine Paar der einander zugeordneten Enden der Schellenhälften 11 und 12 mit Hilfe eines Scharniers (nicht dargestellt) miteinander verbunden ist. Das gegenüberliegende Paar der Enden der Schellenhälfen 11 und 12 ist dann mit Hilfe der Schraube 14 miteinander verbunden. Es versteht sich, dass zur Halterung des Körpers 5, welcher einen anderen als runden Querschnitt aufweisen kann, auch andersartig ausgeführte Schellen 10 oder andersartige Aufnahmemittel 10 verwendet werden können. Der Körper 5 kann im Aufnahmeabschnitt 1 der Halterung geklemmt sein.

Der Aufnahmeabschnitt 1 der Halterung ist mit Hilfe der Verbindungsvorrichtung 4 an den Träger 3 angeschlossen. Wenn der Aufnahmeabschnitt 1 zwei Schellenhälften aufweist, dann ist die Verbindungsvorrichtung 4 an eine der Schellenhälften angeschlossen. Im in Fig. 1 bzw. 2 dargestellten Fall ist die Verbindungsvorrichtung 4 an die untere Schellenhälfte 12 angeschlossen. Die Aussenseite der Schellenhälfte 12 ist mit einem radial abstehenden Zapfen 15 (Fig. 2) versehen, welcher in der Verbindungsvorrichtung 4 eingesteckt ist und welcher zugleich als eine Schwenkachse dient. Denn bei der Verlegung der Halterungen kann es auch winkelmässige Abweichungen der Lage der Längsachse der Halterungen von der Richtung der Längsachse des in den Halterungen gelagerten Rohrs geben.

Die Verbindungsvorrichtung 4, welche in Fig. 3 vergrössert dargestellt ist, weist einen Greifer oder eine Klammer 20 auf, welcher zum kraftschlüssigen Ergreifen bzw. Umfassen bzw. Erfassen eines der länglichen Glieder, z.B. des Stützabschnittes 2 oder des Trägers 3, der vorliegenden Halterung ausgeführt ist. Der kraftschlüssige Anschluss bietet den wesentlichen Vorteil, dass auch ganz kleine Abweichungen der Richtung der Längsachse des Aufnahmeabschnittes 1 von der Richtung der Längsachse des aufzunehmenden Körpers 5 korrigiert werden können. Eine solche Verbindungsvorrichtung 4 bietet zudem den Vorteil, dass ganz beträchtliche Abweichungen der genannten Art ebenfalls korrigiert werden können, wobei die Korrektur solcher Abweichungen, weil man die Verbindungsvorrichtung auf der glatten Oberfläche des Längsgliedes 3 usw. bloss zu verschieben hat, recht schnell durchgeführt werden kann.

Der Greifer 20 ist als eine zwei Schenkel 21 und 22 aufweisende Klammer ausgeführt. Die Schenkel 21 und 22 des Greifers 20 sind einerends mit Hilfe eines Steges bzw. Bodens 23 miteinander verbunden. Ein Abschnitt eines der Längsglieder 2 bzw. 3 der vorliegenden Halterung kann zwischen den Schenkeln 21 und 22 des Greifers 20 Platz finden. Die Form der Greiferschenkel 21 und 22 und des Greiferbodens 23 ist an die Form des Querschnittes des jeweiligen Längsgliedes 2 bzw. 3 angepasst, damit die Schenkel 21 und 22 und der Boden 23 auf der jeweiligen Wand des Längsgliedes 2 bzw. 3 möglichst satt aufliegen können. Da die Längsglieder 2 und 3 im dargestellten Fall plane Wände aufweisen, sind die Schenkel 21 und 22 und der Boden bzw. Steg 23 ebenfalls plan ausgeführt. Im Steg 23 ist eine Bohrung 24 ausgeführt, in der der Zapfen 15 an der Schelle 10 liegt. Der Zapfen 15 kann in der Bohrung 24 drehbar gelagert sein oder er kann in der Bohrung 24 festsitzen.

In den freien Endpartien der Schenkel 21 und 22 ist zumindest je eine Oeffnung 25 ausgeführt, wobei diese Oeffnungen 25 praktisch einander gegenüber liegen. Durch die Oeffnungen 25 ist ein Keil 26 hindurchgesteckt, dessen Querschnitt im wesentlichen V-förmig ist. Im Bereich der freien Endpartien der V-Form weist der Keil 26 Kanten 27 und 28 auf, welche mit Vorteil scharf sind. Der Keil 26 ist in seiner Wirkstellung so orientiert, dass seine Kanten 27 und 28 gegen eine der Wände des sich im Greifer 20 befindlichen Längsgliedes 2 bzw. 3 hin gerichtet sind. Die Oeffnungen 25 sind in den Schenkeln 21 und 22 in einem derartigen Abstand vom Boden 23 des Greifers 20 angeordnet, dass die Kanten 27 und 28 des Keiles 26 auf die dem Keil 26 zugewandte Wand des Längsgliedes 2 bzw. 3 satt aufliegen können.

Mit Hilfe einer solchen Verbindungsvorrichtung 4 ist der Aufnahmeabschnitt 1 der Halterung an den Träger 4 angeschlossen. Wenn die Lage des Aufnahmeabschnittes 1 an die Lage eines verlegten Körpers 5 angepasst werden soll, dann schiebt man zunächst den Keil 26 aus dem Greifer 20 heraus, wodurch der Greifer 20 samt der an diesem angeschlossenen Schelle 10 entlang dem Träger 3 verschiebbar wird. Nach der erforderlichen Verschiebung der Schelle 10 wird der Rohrkörper 5 in die Schelle 10 gelegt und diese wird geschlossen. Jetzt kann der Keil 6 in die Löcher 25 in den Greiferschenkeln 21 und 22 eingetrieben werden, wodurch die Lage der Verbindungsvorrichtung 4 gegenüber dem Träger 3 fixiert wird.

Der Träger 3 umfasst einen Grundkörper 17, welcher einen viereckigen oder quadratischen Querschnitt aufweisen kann. Die Wände eines solchen Grundkörpers 17 können plan und glatt sein. An eine der Endpartien des Grundkörpers 17 des Trägers 3 ist eine Verbindungsvorrichtung 6 angeschlossen, deren Ausführung der vorstehend beschriebenen Verbindungsvorrichtung 4 weitgehend entspricht. Diese zweite Ausführung der Verbindungsvorrichtung weist ebenfalls den Greifer 20 auf. Dieser Greifer 20 ist jedoch über die Aussenseite seines Steges bzw. Bodens 23 an die Stirnfläche der genannten Endpartie des Träger-Grundkörpers 17 stumpf angeschlossen. Die Längsachse des Aufnahmeraumes im derart angeordneten Greifer 20 steht somit praktisch rechtwinklig zur Längsachse des Grundkörpers 17 des Trägers 3. Es versteht sich, dass der Greifer 20 auch unter einem Winkel zum Grundkörper 17 stehen kann, welcher vom Rechten unterschiedlich ist. Der so ausgebildete Träger 3 ist dazu geeignet, dass er einerseits den verlegten Körper 5 aufnehmen kann und dass er andererseits an einen weiteren Bestandteil angeschlossen sein kann.

Der Stützabschnitt 2 der vorliegenden Halterung umfasst einen Grundkörper 18, welcher einen viereckigen oder quadratischen Querschnitt aufweisen kann, wobei die Wände desselben plan und glatt sein können. Dieser Grundkörper 18 ist zum Einschieben in den Greifer 20 am Träger 3 vorgesehen. Hierbei steht der Grundkörper 17 des Trägers 3 unter einem bestimmten Winkel zum Grundkörper 18 des Stützabschnittes 2. Da der Träger 3 entlang dem Stützabschnitt 2 verschiebbar und feststellbar ist, kann hierdurch ebenfalls eine Korrektur der Lage der Schelle 10 gegenüber einem verlegten Körper 5 erreicht werden. Die Richtung dieser Korrektur steht praktisch senkrecht zu jener Korrekturrichtung, welche durch eine Bewegung der Schelle 10 entlang dem Träger 10 erreichbar ist.

An eine der Endpartien des Grundkörpers 18 ist das eigentliche Stützmittel dieses Halterungsabschnittes 2 angeschlossen. Im in Fig. 1 und 2 dargestellten Fall ist das Stützmittel als eine Spitze 30 ausgeführt, welche in den Erdreich, in Magerbeton oder ähnlich eingetrieben ist. Die genannte Endpartie des Grundkörpers 18 ist entweder zu einer solchen Spitze 30 umgeformt, so dass die Spitze 30 einen Fortsatz des Grundkörpers 18 darstellt, oder die Spitze 30 ist an die genannte Endpartie stumpf angeschlossen.

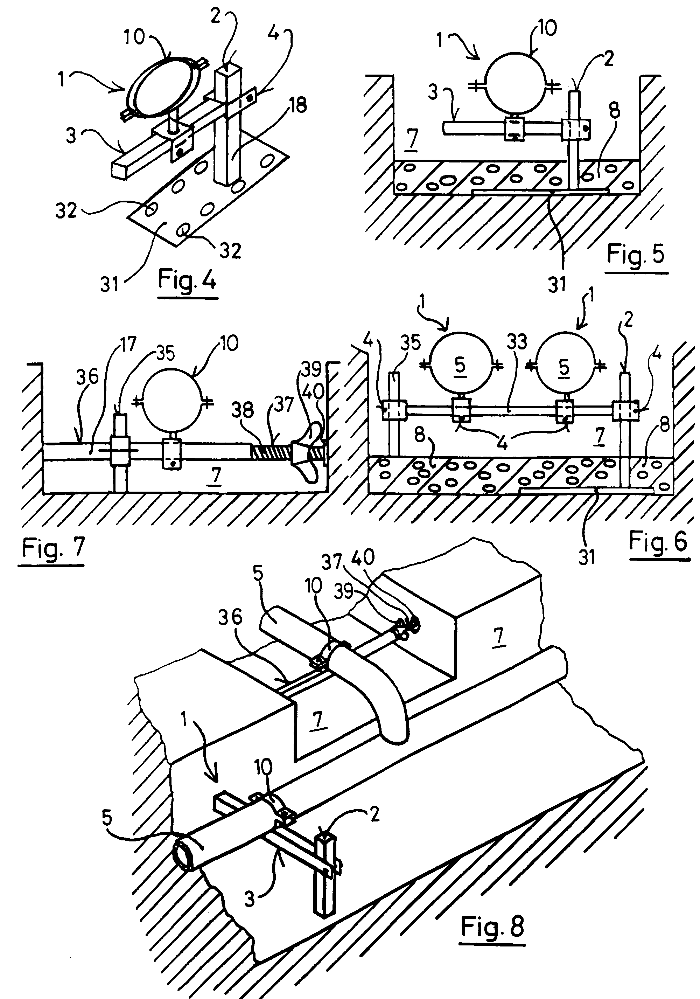

In Fig. 4 und 5 ist eine weitere Ausführungsform der vorliegenden Halterung dargestellt, bei welcher das Stützmittel des Stützabschnittes 2 der Halterung als eine Platte 31 ausgeführt ist. Der Grundkörper 18 steht praktisch rechtwinklig zur Platte 31, welche am Ende dieses Grundkörpers 18, beispielsweise durch Schweissen, befestigt ist. Die Platte 31 ist viereckig und der Grundkörper 18 ist auf dieser Platte 31 aussermittig angebracht. Wie aus Fig. 4 und 5 ersichtlich ist, steht der praktisch horizontal verlaufende Träger 3 seitlich vom Stützabschnitt 2 der Einrichtung ab. Folglich wirkt ein Kippmoment auf den Stützabschnitt 2 ein. Um ein Kippen des Stützabschnittes 2 zu verhindern, wenn eine solche Halterung auf dem Boden des Grabens 7 noch frei steht, ist der Stützengrundkörper 18 von der Mitte der Stützplatte 31 in einer Richtung entfernt befestigt, welche zur Richtung des Trägers 3 entgegengesetzt ist. Wenn man sich vorstellt, dass der Stützengrundkörper 18 die Platte 31 in ihrer Längsrichtung in zwei verschieden lange Teile unterteilt, dann befindet sich der längere Teil der Fussbodenplatte 31 unter dem Träger 3.

Die Fussplatte 31 ist mit Oeffnungen 32 versehen. Diese können im Randbereich oder/und im inneren Bereich der Platte 31 ausgeführt sein. Die Oeffnungen 32 können auch Reihen bilden, von welchen sich beispielsweise je eine in der Nähe der jeweiligen Längskante der Fussplatte 31 befindet. Solche Oeffnungen können zur Befestigung der Halterung an einer bestimmten Stelle dienen. Sie kommen z.B. dann in Einsatz, wenn die Halterung so angeordnet ist, dass der Stützengrundkörper 18 praktisch horizontal und der Träger 3 praktisch vertikal verläuft. Denn in einem solchen Fall muss die Fussplatte 31 an der betreffenden Wand befestigt sein.

Wenn die Halterungen in einem Graben 7 aufgestellt sind, dann werden die Stützengrundkörper 18 nur grob zu einer Reihe ausgerichtet und dann wird Beton 8 nur so hoch in den Graben 7 eingefüllt, dass die Fussplatten 31 und der untere Teil des Grundkörpers 18 mit Beton überdeckt sind. Nachdem Beton oder ähnlich abgebunden hat, kann man die Schellen 10 auf den Trägern 3 so einstellen, dass sie genau fluchten. Danach kann das Rohr 5 in die Schellen 10 eingelegt werden usw.

Fig. 6 zeigt eine Weiterentwicklung der Halterung gemäss Fig. 4 bzw. 5. Wenn eine schwere Leitung 5 oder wenn mehrere Leitungen 5 auf einem einzigen Träger 3 montiert sind, dann ist die Kippbelastung der jeweiligen Halterung ganz beträchtlich. Um den Stützabschnitt 2 in solchen Fällen zu entlasten, können Träger 33 verwendet werden, bei welchen die beiden Enden derselben mit einer Verbindungsvorrrichtung 4 versehen sind. Ueber eine dieser Vorrichtungen 4 ist der Träger 33 an den Grundkörper 18 des Stützabschnittes 2 angeschlossen. Dem anderen Ende des Lastenträgers 33 ist eine längliche Hilfsstütze 35 zugeordnet. Die Form dieser länglichen Hilfsstütze 35 entspricht der Form beispielsweise des Grundkörpers 18 des Stützabschnittes 2. Die Länge der Hilfsstütze 35 ist jedoch etwas kleiner als die des genannten Grundkörpers 18.

Nachdem Beton 8 bei der Verwendung des Lastträgers 33 abgebunden hat, wird dieser Träger 33 über eine der Verbindungsvorrichtungen 4 an den Grundkörper 18 einerends angeschlossen. Durch die Verbindungsvorrichtung 4 am anderen Ende des Trägers 33 wird die Hilfsstütze 35 hindurchgesteckt, bis ihr unteres Ende auf der Oberfläche der Betonschicht 8 ruht. Jetzt können die Keile 26 in den beiden Verbindungsvorrichtungen 4 eingetrieben werden, hiernach werden die Schellen 10 ausgerichtet, dann werden die Rohre 5 in die Schellen 10 eingelegt, usw.

Es gibt Situationen, in welchen es nur möglich ist, den Träger für die Schelle 10 zwischen zwei einander gegenüberliegenden Wänden zu befestigen. Für solche Fälle ist eine weitere Ausführungsform der vorliegenden Halterungseinrichtung vorgesehen, welche unter anderem in Fig. 7 dargestellt ist. Bei dieser Ausführungsmöglichkeit weist der Träger 36 den bereits beschriebenen Grundkörper 17 sowie eine Spannvorrichtung 37 auf. Das eine Ende des Trägergrundkörpers 17 wird an einer der Wände direkt oder unter der Zwischenlage einer Auflageplatte (nicht dargestellt) an die Wand angelegt. Die Spannvorrichtung 37 kann als eine Spannschraube 37 ausgeführt sein und diese ist dem anderen Ende des Grundkörpers 17 zugeordnet. Die Spannschraube 37 umfasst einen Schraubbolzen 38, welcher in das Innere des Träger-grundkörpers 1 einfahrbar ist. Auf dem Schraubbolzen 38 sitzt eine Mutter 39, welche vorteilhaft eine Flügelmutter ist. Diese Mutter 39 stützt sich auf der Frontkante dieses Endes des Grundkörpers 17 ab. Die freie Endpartie des Schraubbolzens 38 kann ebenfalls mit einer Auflageplatte 40 versehen sein. Wenn man die Mutter 39 in der Richtung dreht, dass der Schraubbolzen 38 aus dem Grundkörper 17 herausfährt, dann entsteht ein Druck, welchen ein solcher Träger 36 auf die Seitenwände ausübt und dadurch erhält der Träger seinen Halt zwischen den Wänden.

Dem Grundkörper 17 des Trägers 36 ist zumindest eine Hilfsstütze 35 in der bereits beschriebenen Weise, d.h. unter Verwendung der Verbindungsvorrichtung 4, zugeordnet. Die Hilfsstütze 35 bietet Gewähr dafür, dass die Halterungseinrichtung auch in dem Fall an Ort und Stelle bleibt, wenn die Spannkraft im Träger 36 aus irgend welchen Gründen nachlassen sollte.

## Patentansprüche

1. Einrichtung zur Halterung eines länglichen Körpers (5), mit einem ersten Abschnitt (1), welcher eine Vorrichtung (10) zum Erfassen des länglichen Körpers (5) aufweist, und mit einem länglichen Träger (3) für die Erfassungsvorrichtung (10), welcher praktisch senkrecht zum länglichen Körper verläuft, wobei die Erfassungsvorrichtung (10) gegenüber dem Träger (3) stufenlos verstellbar ist, dadurch gekennzeichnet, dass die Erfassungsvorrichtung (10) so ausgeführt ist, dass sie den länglichen Körper (5) umfasst, dass eine Vorrichtung (4) vorgesehen ist, welche die Erfassungsvorrichtung (10) mit dem Träger (3) verbindet, dass diese Verbindungsvorrichtung (4) entlang dem Träger (3) verstellbar und an einer Stelle desselben kraftschlüssig fixierbar ist und dass die Einrichtung einen zweiten und ebenfalls länglichen Abschnitt (2) aufweist, welcher zur Abstützung des Trägers (3) ausgebildet ist, wobei der Träger (3) von dieser Stütze (2) seitlich absteht.

2. Einrichtung nach Anspruch 1, dadurch gekennzeichnet, dass die Erfassungsvorichtung (10) über einen Zapfen (15) an die Verbindungsvorrichtung (4) angeschlossen ist und dass dieser Zapfen (15) in der Verbindungsvorrichtung (4) drehbar gelagert sein kann.

3. Einrichtung nach Anspruch 2, dadurch gekennzeichnet, dass die Erfassungsvorrichtung als eine Schelle (10) ausgeführt ist, dass diese Schelle (10) zwei Hälften (11,12) aufweist, dass zwischen diesen Schellenhälften der längliche Körper (5) klemmbar ist und dass der Zapfen (15) einer der Hälften (12) dieser Schelle (10) zugeordnet ist.

4. Einrichtung nach Anspruch 3, dadurch gekennzeichnet, dass die Endpartien der Schellenhälften mit radial abstehenden Flanschen (13) versehen sind, welche zur Zusammenfügung der Schellenhälften (11,12) ausgebildet sind, dass die Flansche (13) geschlossene oder gegen aussen hin offene Löcher aufweisen, durch welche Schrauben (14) hindurchgehen können, oder dass das eine Paar der einander zugeordneten Enden der Schellenhälften (11, 12) mit Hilfe eines Scharniers miteinander verbunden ist, während das gegenüberliegende Paar der Enden der Schellenhälfen (11,12) mit Hilfe einer Schraube (14) miteinander verbunden ist.

5. Einrichtung nach Anspruch 1, dadurch gekennzeichnet, dass zumindest eine der Partien, vorteilhaft eine der Endpartien, des Trägers (3) bzw. des Grundkörpers (17) desselben mit einer Verbindungsvorrichtung (6) versehen ist und dass die Stütze (2) durch diese Verbindungsvorrichtung (6) hindurchgeht.

6. Einrichtung nach Anspruch 1, dadurch gekennzeichnet, dass die Verbindungsvorrichtung (4;6) eine im wesentlichen U-förmige Klammer (20) aufweist, dass der Innenraum dieser Klammer zur Aufnahme des betreffenden länglichen Grundkörpers (17,18, 35,36) eines anderen Bestandteiles dieser Einrichtung bestimmt und ausgebildet ist, dass die die Schenkel (21,22) der Klammer (20) verbindende Partie bzw. der Steg (23) zum Anschluss an jenen Bestandteil dieser Einrichtung bestimmt und ausgebildet ist, an den die Klammer (20) angeschlossen ist, dass die freie Endpartie des jeweiligen Schenkels (21;22) zumindest eine Oeffnung (25) aufweist, dass diese Oeffnungen (25) einander gegenüberliegen und dass durch diese Oeffnungen ein Keil (26) hindurchgeht.

7. Einrichtung nach Anspruch 6, dadurch gekennzeichnet, dass der Keil (26) einen im wesentlichen V-förmig Querschnitt aufweist, dass der Keil (26) im Bereich der freien Endpartien der V-Form Kanten (27,28) aufweist, welche mit Vorteil scharf sind, dass der Keil (26) in seiner Wirkstellung so orientiert ist, dass seine Kanten (27,28) gegen eine der Wände des sich in der Klammer (20) befindlichen Längsgliedes (2;3) hin gerichtet sind, dass die Oeffnungen (25) in den Schenkeln (21,22) in einem Abstand vom Steg (23) der Klammer (20) angeordnet sind und dass die Kanten (27,28) des Keiles (26) auf die dem Keil (26) zugewandte Wand des Längsgliedes (2;3) satt aufliegen können.

8. Einrichtung nach Anspruch 1, dadurch gekennzeichnet, dass der Träger (3) bzw. die Stütze (2) einen länglichen Grundkörper (17;18) aufweist, dass wenigstens eine Partie dieses Grundkörpers (17;18) einen viereckigen oder quadratischen Querschnitt aufweist und dass die Wände dieser Partie plan und glatt sind.

9. Einrichtung nach Anspruch 8, dadurch gekennzeichnet, dass an eine der Endpartien des Grundkörpers (18) der Stütze (2) ein Stützmittel angeschlossen ist und dass dieses Stützmittel als ein spitziger Fortsatz (30) des Grundkörpers (18) oder als eine Fussplatte (31) ausgeführt ist, welche an einer der Endpartien des Grundkörpers (18) befestigt ist.

10. Einrichtung nach Anspruch 9, dadurch gekennzeichnet, dass der Grundkörper (18) der Stütze (2) praktisch rechtwinklig zur Fussplatte (31) steht, welche am Ende dieses Grundkörpers (18), beispielsweise durch Schweissen, befestigt ist, dass der Grundkörper (18) auf der Fussplatte (31) aussermittig angebracht ist und dass der längere Teil der Fussplatte (31) sich unter dem Träger (3) befindet.

11. Einrichtung nach Anspruch 9, dadurch gekennzeichnet, dass die Fussplatte (31) mit Oeffnungen (32) versehen ist, dass diese im Randbereich oder/und im inneren Bereich der Platte (31) ausgeführt sind und dass die Oeffnungen (32) Reihen bilden können, von welchen sich beispielsweise je eine in der Nähe der jeweiligen Längskante der Fussplatte (31) befindet.

12. Einrichtung nach Anspruch 1, dadurch gekennzeichnet, dass die beiden Enden des Trägers (33) mit je einer Verbindungsvorrichtung (4) versehen sind, dass der Träger (33) über eine dieser Vorrichtungen (4) an den Grundkörper (18) der Stütze (2) angeschlossen ist und dass dem anderen Ende des Trägers (33) eine längliche Hilfsstütze (35) zugeordnet ist.

13. Einrichtung nach Anspruch 1, dadurch gekennzeichnet, dass zumindest eine der Endpartien des Trägers (36) mit einer Spannvorrichtung (37) versehen ist, welche zur Auflage an einer von zwei einander gegenüberliegenden Wänden bestimmt ist, dass das andere Ende des Trägers (36) direkt oder unter der Zwischenlage einer Auflageplatte an der gegenüber liegenden Wand angelegt werden kann, und dass die Spannvorrichtung eine Spannschraube (37) aufweisen kann, welche dem erst genannten Ende des Grundkörpers (17) zugeordnet ist.

14. Einrichtung nach Anspruch 13, dadurch gekennzeichnet, dass die Spannschraube (37) einen Schraubbolzen (38) umfasst, welcher in das Innere des Trägergrundkörpers (1) einschraubbar ist, dass eine Mutter (39) auf dem Schraubbolzen (38) sitzt, welche vorteilhaft eine Flügelmutter ist, dass diese Mutter (39) sich auf der Frontkante dieses Endes des Grundkörpers (17) abstützt und dass die freie Endpartie des Schraubbolzens (38) mit einer Auflageplatte (40) versehen sein kann.

15. Einrichtung nach Anspruch 2, dadurch gekennzeichnet, dass im Steg (23) der Verbindungsvorrichtung (4) eine Bohrung (24) ausgeführt ist, in der der Zapfen (15) einerends liegt, und dass der Zapfen (15) in der Bohrung (24) entweder drehbar gelagert ist oder in der Bohrung (24) festsitzt.

## Claims

1. Arrangement for retaining an elongate body (5), having a first section (1), which has a device (10) for gripping the elongate body (5), and having an elongate carrier (3) which is intended for the gripping device (10) and, in practice, runs perpendicularly with respect to the elongate body, it being possible for the gripping device (10) to be adjusted in a stepless manner with respect to the carrier (3), characterized in that the gripping device (10) is configured such that it encloses the elongate body (5), in that a device (4) which connects the gripping device (10) to the carrier (3) is provided, in that this connecting device (4) can be adjusted along the carrier (3) and can be fixed in a frictionally locking manner at a location of this carrier, and in that the arrangement has a second, and likewise elongate, section (2), which is designed for supporting the carrier (3), the carrier (3) projecting laterally from said support (2).

2. Arrangement according to Claim 1, characterized in that the gripping device (10) is attached to the connecting device (4) via a pin (15), and in that this pin (15) can be mounted rotatably in the connecting device (4).

3. Arrangement according to Claim 2, characterized in that the gripping device is configured as a clamp (10), in that this clamp (10) has two halves (11, 12), in that the elongate body (5) can be clamped between these clamp halves, and in that the pin (15) is assigned to one (12) of the halves of this clamp (10).

4. Arrangement according to Claim 3, characterized in that the end parts of the clamp halves are provided with radially projecting flanges (13) which are designed for joining together the clamp halves (11, 12), in that the flanges (13) have holes which are closed or are open towards the outside and through which screws (14) can pass, or in that one pair of mutually associated ends of the clamp halves (11, 12) is connected with the aid of a hinge, while the opposite pair of ends of the clamp halves (11, 12) is connected with the aid of a screw (14).

5. Arrangement according to Claim 1, characterized in that at least one of the parts, advantageously one of the end parts, of the carrier (3), or of the basic body (17) thereof, is provided with a connecting device (6), and in that the support (2) passes through this connecting device (6).

6. Arrangement according to Claim 1, characterized in that the connecting device (4; 6) has an essentially U-shaped bracket (20), in that the interior of this bracket is intended, and designed, for receiving the relevant elongate basic body (17, 18, 35, 36) of another constituent part of said arrangement, in that the part which connects the legs (21, 22) of the bracket (20), in other words the web (23), is intended, and designed, for attachment to that constituent part of said arrangement to which the bracket (20) is attached, in that the free end part of the respective leg (21; 22) has at least one opening (25), in that these openings (25) are located opposite one another, and in that a wedge (26) passes through these openings.

7. Arrangement according to Claim 6, characterized in that the wedge (26) has an essentially V-shaped cross-section, in that, in the region of the free end parts of the V-shape, the wedge (26) has edges (27, 28), which are advantageously sharp, in that, in its active position, the wedge (26) is oriented such that its edges (27, 28) are directed towards one of the walls of the longitudinal member (2; 3) located in the bracket (20), in that the openings (25) in the legs (21, 22) are arranged at a distance from the web (23) of the bracket (20), and in that the edges (27, 28) of the wedge (26) can bear flush against that wall of the longitudinal member (2; 3) which is directed towards the wedge (26).

8. Arrangement according to Claim 1, characterized in that the carrier (3) or the support (2) has an elongate basic body (17; 18), in that at least part of this basic body (17; 18) has a quadrilateral or square cross-section, and in that the walls of this part are planar and smooth.

9. Arrangement according to Claim 8, characterized in that a supporting means is attached to one of the end parts of the basic body (18) of the support (2), and in that this supporting means is configured as a pointed continuation (30) of the basic body (18) or as a base plate (31) which is fastened on one of the end parts of the basic body (18).

10. Arrangement according to Claim 9, characterized in that, in practice, the basic body (18) of the support (2) is located at right angles to the base plate (31), which is fastened at the end of said basic body (18), for example, by welding, in that the basic body (18) is fitted eccentrically on the base plate (31), and in that the longer part of the base plate (31) is located beneath the carrier (3).

11. Arrangement according to Claim 9, characterized in that the base plate (31) is provided with openings (32), in that these openings are made in the border region and/or in the inner region of the plate (31), and in that the openings (32) may form rows, of which, for example, in each case one is located in the vicinity of the respective longitudinal edge of the base plate (31).

12. Arrangement according to Claim 1, characterized in that the two ends of the carrier (33) are each provided with a connecting device (4), in that the carrier (33) is attached to the basic body (18) of the support (2) via one of these devices (4), and in that the other end of the carrier (33) is assigned an elongate auxiliary support (35).

13. Arrangement according to Claim 1, characterized in that at least one of the end parts of the carrier (36) is provided with a tensioning device (37), which is intended for bearing on one of two mutually opposite walls, in that the other end of the carrier (36) can be positioned against the opposite wall directly or with the interposition of a bearing plate, and in that the tensioning device may have a tensioning screw (37), which is assigned to the first-mentioned end of the basic body (17).

14. Arrangement according to Claim 13, characterized in that the tensioning screw (37) comprises a screw bolt (38), which can be screwed into the interior of the basic body (17) of the carrier, in that a nut (39), advantageously a wing nut, is seated on the screw bolt (38), in that this nut (39) is supported on the front edge of said end of the basic body (17), and in that the free end part of the screw bolt (38) may be provided with a bearing plate (40).

15. Arrangement according to Claim 2, characterized in that the web (23) of the connecting device (4) has a bore (24), in which one end of the pin (15) is located, and in that either the pin (15) is mounted rotatably in the bore (24) or it is secured in the bore (24).

## Revendications

1. Dispositif de fixation d'un corps oblong (5), ayant une première section (1) présentant un organe (10) pour saisir le corps oblong (5), et ayant un support oblong (3) pour l'organe de saisie (10), lequel s'étend pratiquement perpendiculairement au corps oblong, l'organe de saisie (10) étant déplaçable sans gradation par rapport au support (3), caractérisé en ce que l'organe de saisie (10) est réalisé de telle sorte qu'il entoure le corps oblong (5), en ce qu'il est prévu un organe (4) qui relie l'organe de saisie (10) au support (3), en ce que cet organe de liaison (4) est déplaçable le long du support (3) et peut être fixé par engagement positif à un endroit de celui-ci, et en ce que le dispositif présente une deuxième section également oblongue (2) qui est conçue pour servir d'appui au support (3), le support (3) s'étendant latéralement depuis cet appui (2).

2. Dispositif selon la revendication 1, caractérisé en ce que l'organe de saisie (10) est raccordé par un tourillon (15) à l'organe de liaison (4), et en ce que ce tourillon (15) peut être placé à rotation dans l'organe de liaison (4).

3. Dispositif selon la revendication 2, caractérisé en ce que l'organe de saisie est réalisé en tant que collier de serrage (10), en ce que ce collier de serrage (10) présente deux moitiés (11, 12), en ce que le corps oblong (5) peut être serré entre ces moitiés de collier de serrage, et en ce que le tourillon (15) est associé à l'une des moitiés (12) de ce collier de serrage (10).

4. Dispositif selon la revendication 3, caractérisé en ce que les parties d'extrémité des moitiés de collier de serrage sont pourvues de brides (13) s'étendant radialement vers l'extérieur, qui sont conçues pour assembler les moitiés (11, 12) de collier de serrage, en ce que les brides (13) présentent des orifices fermés ou ouverts vers l'extérieur, à travers lesquels des vis (14) peuvent passer, ou en ce que deux des extrémités mutuellement associées des moitiés (11, 12) de collier de serrage sont reliées l'une à l'autre au moyen d'une charnière, tandis que les deux extrémités opposées des moitiés (11, 12) de collier de serrage sont reliées l'une à l'autre au moyen d'une vis (14).

5. Dispositif selon la revendication 1, caractérisé en ce qu'au moins l'une des parties, avantageusement l'une des parties d'extrémité, du support (3) ou du corps de base (17) de celui-ci est pourvue d'un organe de liaison (6) et en ce que l'appui (2) traverse cet organe de liaison (6).

6. Dispositif selon la revendication 1, caractérisé en ce que l'organe de liaison (4; 6) présente une agrafe (20) essentiellement en forme de U, en ce que l'espace intérieur de cette agrafe est défini et conçu pour recevoir le corps de base oblong en question (17, 18, 35, 36) d'un autre composant de ce dispositif, en ce que la partie ou la traverse (23) reliant les branches (21, 22) de l'agrafe (20) est définie et conçue pour se raccorder à chaque composant de ce dispositif, auquel la bride de fixation (20) est raccordée, en ce que la partie d'extrémité libre de chaque branche respective (21; 22) présente au moins une ouverture (25), en ce que ces ouvertures (25) sont en regard l'une de l'autre et en ce qu'une clavette (26) traverse ces ouvertures.

7. Dispositif selon la revendication 6, caractérisé en ce que la clavette (26) présente une section transversale essentiellement en forme de V, en ce que la clavette (26) présente, dans la région des parties d'extrémité libres de la forme en V des arêtes (27, 28), qui sont avantageusement pointues, en ce que la clavette (26) est orientée de telle sorte dans sa position active, que ses arêtes (27, 28) soient orientées vers l'une des parois de l'élément longitudinal (2; 3) se trouvant dans l'agrafe (20), en ce que les ouvertures (25) dans les branches (21, 22) sont disposées à une certaine distance de la traverse (23) de l'agrafe (20) et en ce que les arêtes (27, 28) de la clavette (26) peuvent reposer à plat point sur la paroi de l'élément longitudinal (2; 3) tournée vers la clavette (26).

8. Dispositif selon la revendication 1, caractérisé en ce que le support (3), respectivement l'appui (2) présentent un corps de base oblong (17; 18), en ce qu'au moins une partie de ce corps de base (17; 18) présente une section transversale quadrangulaire ou carrée et en ce que les parois de cette partie sont planes et lisses.

9. Dispositif selon la revendication 8, caractérisé en ce qu'un moyen d'appui est raccordé à l'une des parties d'extrémité du corps de base (18) de l'appui (2), et en ce que ce moyen d'appui est réalisé en tant que prolongement en pointe (30) du corps de base (18) ou en tant que plaque d'assise (31), laquelle est fixée à l'une des parties d'extrémité du corps de base (18).

10. Dispositif selon la revendication 9, caractérisé en ce que le corps de base (18) de l'appui (2) se trouve pratiquement à angle droit par rapport à la plaque d'assise (31), laquelle est fixée, par exemple par soudage, à l'extrémité de ce corps de base (18), en ce que le corps de base (18) est monté excentriquement sur la plaque d'assise (31) et en ce que la partie plus longue de la plaque d'assise (31) se trouve sous le support (3).

11. Dispositif selon la revendication 9, caractérisé en ce que la plaque d'assise (31) est pourvue d'ouvertures (32), en ce que celles-ci sont réalisées dans la région périphérique et/ou dans la région interne de la plaque (31), et en ce que les ouvertures (32) peuvent former des rangées, par exemple une rangée se trouvant à chaque fois à proximité de l'arête longitudinale respective de la plaque d'assise (31).

12. Dispositif selon la revendication 1, caractérisé en ce que les deux extrémités du support (33) sont pourvues chacune d'un organe de liaison (4), en ce que le support (33) est raccordé par le biais de l'un de ces organes (4) au corps de base (18) de l'appui (2) et en ce qu'à l'autre extrémité du support (33) est associé un appui oblong auxiliaire (35).

13. Dispositif selon la revendication 1, caractérisé en ce qu'au moins l'une des parties d'extrémité du support (36) est pourvue d'un organe de serrage (37), qui est défini pour reposer sur l'une de deux parois opposées, en ce que l'autre extrémité du support (36) peut être placée directement ou par l'intermédiaire d'une plaque d'appui contre la paroi opposée, et en ce que l'organe de serrage peut présenter une vis de serrage (37) qui est associée à l'extrémité mentionnée en premier du corps de base (17).

14. Dispositif selon la revendication 13, caractérisé en ce que la vis de serrage (37) comprend un boulon fileté (38) qui peut être vissé dans l'intérieur du corps de base (1) du support, en ce qu'un écrou (39) se place sur le boulon fileté (38), lequel est avantageusement un écrou à oreilles, en ce que cet écrou (39) s'appuie sur l'arête frontale de cette extrémité du corps de base (17) et en ce que la partie d'extrémité libre du boulon fileté (38) peut être pourvue d'une plaque d'appui (40).

15. Dispositif selon la revendication 2, caractérisé en ce qu'un alésage (24) est pratiqué dans la traverse (23) de l'organe de liaison (4), dans lequel le tourillon (15) est placé à une extrémité, et en ce que le tourillon (15) est soit placé à rotation dans l'alésage (24), soit est fixe dans l'alésage (24).
